**Europäisches Patentamt**

**European Patent Office**

**Office européen des brevets**

(19)

(11) Veröffentlichungsnummer: **0 229 991**
**B1**

(12)

# EUROPÄISCHE PATENTSCHRIFT

(45) Veröffentlichungstag der Patentschrift:
17.10.90

(21) Anmeldenummer: 86117363.1

(22) Anmeldetag: 12.12.86

(51) Int. Cl.⁵: **G01V 3/10**, A01D 75/18

(54) Vorrichtung zum Schutz vor metallischen Fremdkörpern.

(30) Priorität: 24.12.85 DD 285427

(43) Veröffentlichungstag der Anmeldung:
29.07.87 Patentblatt 87/31

(45) Bekanntmachung des Hinweises auf die Patenterteilung:
17.10.90 Patentblatt 90/42

(84) Benannte Vertragsstaaten:
AT BE CH DE FR GB IT LI NL SE

(56) Entgegenhaltungen:
US-A- 3 889 249
US-A- 3 896 608
US-A- 4 344 074

(73) Patentinhaber: VEB KOMBINAT FORTSCHRITT
LANDMASCHINEN, Berghausstrasse 1,
DDR-8355 Neustadt in Sachsen(DD)

(72) Erfinder: Weiss, Burkhard, ASS 12,
DDR-8701 Weigsdorf-Köblitz(DD)
Erfinder: Hauschild, Arthur, Hohnsteiner Strasse 17,
DDR-8360 Sebnitz(DD)
Erfinder: Herrmann, Erich, Mittelweg 19A,
DDR-8351 Polenz(DD)

(74) Vertreter: Zipse + Habersack, Kemnatenstrasse 49,
D-8000 München 19(DE)

**Beschreibung**

Die Erfindung betrifft eine Vorrichtung zum Schutz der Arbeitsorgane einer Erntemaschine vor metallischen Fremdkörpern, insbesondere an Feldhäckslern, in deren Zuführungssystem ein Erkennungssystem eingeordnet ist, das eine Magnetfelderzeugungseinrichtung zur Erzeugung eines etwa über die Breite des Erntegutförderweges reichenden Magnetfeldes und eine dem Magnetfeld zugeordnete Aufnahmespule aufweist, in der bei Förderung eines metallischen Fremdkörpers durch das Magnetfeld hindurch ein an nachgeschaltete Signalauswerteeinrichtungen weitergeleitetes Erkennungssignal induziert wird.

Durch die DE-OS 22 52 595 ist eine Vorrichtung zum Schutz vor metallischen Fremdkörpern im Erntegutstrom eines Feldhäckslers bekannt, die eine Magnetfelderzeugungseinrichtung aufweist, wobei entweder mittels Dauer- oder Elektromagnet ein etwa über die Breite des Erntegutförderweges reichendes und vom Feldlinienverlauf her ein in Förderrichtung des Erntegutes zeigendes Magnetfeld erzeugt wird. Im Wirkungsbereich dieses Magnetfeldes befindet sich eine erste und eine zweite Aufnahmespule von je zwei symmetrischen Spulenabschnitten, die durch sich jeweils in einem Kreuzungspunkt kreuzende Leiter verbunden sind. Beide Aufnahmespulen sind so zueinander versetzt, daß sich ihre Kreuzungspunkte im Bereich eines Spulenabschnittes der anderen Aufnahmespule befinden.

Nachteilig an einer derartigen Vorrichtung ist der hohe Aufwand für die Herstellung der beiden Aufnahmespulen, der aber aus funktionellen Gründen notwendig ist, da bei Verwendung nur einer Aufnahmespule in deren Kreuzungspunkt ein metallischer Fremdkörper nicht erkannt werden kann. Ursächlich dafür ist, daß in beiden Spulenabschnitten eine gleich große und entgegengesetzt gerichtete Spannung induziert wird, so daß kein Erkennungssignal entstehen kann. Dieser sogenannte Kompensationseffekt wirkt zwar für sich dem Magnetfeld nähernde metallische Teile symmetrischen Aufbaues positiv, da durch diese Teile kein Erkennungssignal induziert werden darf, aber zum Erkennen metallischer Fremdkörper ist dieser Komponsationseffekt negativ, solange der metallische Fremdkörper auf beide Spulenabschnitte eine Wirkung ausübt. Trotz der Verwendung von zwei versetzt angeordneten Aufnahmespulen bietet diese Vorrichtung keinen ausreichenden Schutz vor metallischen Fremdkörpern, da die Reichweite der Feldlinien des Magnetfeldes, insbesondere beim jetzt gebräuchlichsten Einbaufall in die vordere untere Walze des Zuführsystemes, begrenzt ist.

Durch die DE-PS 24 30 147 ist eine weitere Vorrichtung zum Schutz vor metallischen Fremdkörpern bekannt geworden, bei der die Magnetfelderzeugungseinrichtung aus zwei über die Breite des Förderweges gesehen nebeneinander angeordneten Magneten besteht, die zwei nebeneinanderliegende Magnetfeld gleicher Stärker mit entgegengesetzter Wirkungsrichtung erzeugen. Die Magnetfeldwirkungslinien zeigen dabei in bzw. entgegengesetzt der Förderrichtung des Erntegutes. Um die Magnetfelderzeugungseinrichtung herum ist eine Aufnahmespule in Form einer Schleife gelegt.

Bei dieser Vorrichtung ist von Nachteil, daß analog wie beim Kreuzungspunkt der Aufnahmespule nach der DE-OS 22 52 595 im Grenzbereich zwischen den beiden Magnetfeldern durch einen metallischen Fremdkörper kein Erkennungssignal erzeugt werden kann. Dessen Größe ist außerdem noch so lange unzureichend, wie sich der metallische Fremdkörper im Wirkungsbereich beider Magnetfelder befindet. Einen ausreichenden Schutz bietet diese Vorrichtung auch deshalb nicht, da wie bei der DE-OS 22 52 595 die Reichweiten beider Magnetfelder begrenzt sind.

In der "Agrartechnik international" - Ausgabe April 1983 - ist eine weitere Vorrichtung zum Schutz vor metallischen Fremdkörpern beschrieben, bei der die Magnetfelderzeugungseinrichtung und die Signalaufnahmespule feststehend innerhalb der unteren Walze des Zuführsystemes angebracht sind. Das in Förderrichtung des Erntegutes zeigende Magnetfeld wird durch einen Dauermagneten erzeugt, bei dem sich der Nordpol innerhalb von zwei Südpolen befindet. Um den Nordpol herum ist die aus mehreren Windungen bestehende Aufnahmespule in Form einer einfachen Schleife gelegt.

Auch diese Vorrichtung bietet keinen ausreichenden Schutz vor metallischen Fremdkörpern, da die Reichweite des Magnetfeldes aufgrund des geringen Polabstandes und der geringen Ausdehnung der Pole gering ist. Darüber hinaus sind die Randzonen bei der praktisch ausgeführten Lösung infolge der Dimensionierung und Anordnung der Spulen sehr umempfindlich. Durch die breite Bauweise des Dauermagneten ist es beim Einbau in die untere Walze nicht möglich, dessen Magnetfeld sehr nahe an den Erntegutstrom zu bringen, was zu Lasten der Reichweite geht. Auch die Wickelung einer derartigen Aufnahmespule mit relativ großer Länge und kleiner Breite ist sehr kompliziert und zeitaufwendig, und wird deshalb bei der ausgeführten Lösung nicht realisiert, was zu erheblichen Nachteilen in der Erkennungsbreite führt.

Allen drei beschriebenen Vorrichtungen haftet gemeinsam der Nachteil an, daß sie über das bereits beschriebene Maß hinaus einen großen Aufwand erfordern, da sich die Magnetfelderzeugungseinrichtung und die Signalaufnahmespulen über den gesamten Erkennungsbereich erstrecken müssen, wenn die beabsichtigte Wirkung erzielt werden soll. Durch die vorliegende Erfindung soll hier Abhilfe geschaffen werden.

Deshalb liegt der Erfindung die Aufgabe zugrunde, eine Vorrichtung zum Schutz vor metallischen Fremdkörpern zu schaffen, die eine annähernd gleichbleibende und über die gesamte Breite des Zuführsystemes einer Erntemaschine reichende Erkennungsmöglichkeit mit hoher Reichweite bei großer Empfindlichkeit bietet und an deren Aufnahmespulen keine hohen Anforderungen in der Herstellung gestellt werden.

Bei der Vorrichtung zum Schutz der Arbeitsorgane einer Erntemaschine, insbesondere eines Feldhäckslers, die in der Nähe des zuzuführenden Erntegutes angeordnet ist und die eine Magnetfelderzeugungseinrichtung zur Erzeugung eines etwa über die Breite des Förderweges reichenden Magnetfeldes sowie eine dem Magnetfeld zugeordnete Aufnahmespule aufweist, in der bei Förderung eines metallischen Fremdkörpers durch das Magnetfeld hindurch ein an nachgeschaltete Signalauswerteeinrichtungen weitergeleitetes Erkennungssignal induziert wird, wird diese Aufgabe erfindungsgemäß dadurch gelöst, daß die Magnetfelderzeugungseinrichtung aus einem Magneten besteht, dessen einer Pol sich über die Breite des Förderweges gesehen auf der einen Hälfte befindet und der andere Pol auf der anderen Hälfte, so daß ein Magnetfeld entsteht, dessen Magnetfeldwirkungslinien quer zur Förderrichtung des Erntegutes verlaufen und daß sich annähernd im mittleren Bereich jedes Poles um diesen herum je eine Aufnahmespule gelegt ist, die untereinander so in Reihe geschaltet sind, daß sich die durch Annäherung eines metallischen Fremdkörpers in beiden Aufnahmespulen erzeugten Ströme addieren. Erreicht die zu untersuchende Breite des Förderweges des Erntegutes eine bestimmte Größe, ist es zweckmäßig, jeden Pol des Magneten aus zwei oder mehr Einzelmagnetpolen gleicher Polarität zusammenzusetzen. In der Praxis hat es sich gezeigt, daß es beispielsweise bei Verwendung von drei Einzelmagnetpolen ausreichend ist, wenn jeweils um den mittleren Einzelmagnetpol eine Aufnahmespule gewickelt ist. Sieht man von oben auf die um die Einzelmagnetpole gelegten Aufnahmespulen gleichen Aufbaus, so sind die linken Anschlußklemmen über ein Kabel zur Signalauswerteeinrichtung geführt, und die beiden übrigen Anschlußklemmen sind miteinander elektrisch leitend verbunden. Analog ist es möglich, die linken Anschlußklemmen miteinander elektrisch leitend zu verbinden und die übrigen Anschlußklemmen über ein Kabel zur Signalauswerteeinrichtung zu führen.

Zur Erzeugung eines relativ starken und über die gesamte Breite des Förderweges vorhandenen Erkennungssignales ist es zweckmäßig, daß die Abmessungen der Pole so gewählt sind, daß sie annähernd von der Seitenwand des Zuführsystemes bis zu dessen Mitte reichen.

Nähert sich nun ein metallischer Fremdkörper dem Magnetfeld, so werden daraufhin dessen Wirkungslinien verschoben bzw. geschnitten, wodurch nach dem allgemein bekannten Induktionsprinzip in den Aufnahmespulen Spannungen induziert werden, die einen Strom fließen lassen. Durch die Anwendung der erfindungsgemäßen Reihenschaltung der Aufnahmespulen wird nun nicht mehr wie vorher beim Stand der Technik mit Kompensationseffekt die Differenz zwischen zwei Strömen zur Erzeugung eines Signals benutzt, sondern deren Summe. Damit kommt es zu einem relativ starken Signal, das über die gesamte Breite des Förderweges mit annähernd gleicher Stärke erzeugt werden kann. Dieser Effekt ist selbst dann vorhanden, wenn sich die Aufnahmespulen lediglich im mittleren Bereich der Pole des Magneten befinden. Am stärksten ist dieses Signal, wenn der metallische Fremdkörper etwas außerhalb der Mitte des Zuführsystemes ankommt, und es fällt erst unmittelbar neben der Seitenwand des Zuführsystemes auf Null ab. Durch die Verwendung von je einer Aufnahmespule um jeden Einzelmagnetpol und dessen analoge Reihenschaltung zu den Aufnahmespulen um die Einzelmagnetpole auf der anderen Seite ist es zwar noch möglich, die Signalerzeugung bezüglich Stärke und höherer Gleichmäßigkeit über die Breite des Förderweges positiv zu beeinflussen, jedoch hat sich im praktischen Betrieb herausgestellt, daß dieser Aufwand unnötig ist.

Voraussetzung für eine einwandfreie Funktion der erfindungsgemäßen Vorrichtung zum Schutz vor metallischen Fremdkörpern ist aber, daß alle sich im Erkennungsbereich befindenden bewegenden Maschinenteile aus nichtmagnetischen Werkstoffen sind. Deshalb ist es zweckmäßig, die untere vordere Walze aus Plast herzustellen und die dahinter und darüber liegende Walze aus nichtmagnetischem Stahl oder ebenfalls aus Plast. Das ist aber auch bei allen bisher bekannten Lösungen so, da sonst trotz Anwendung des Kompensationseffektes durch Unsymmetrie der Magnete bzw. der Aufnahmespulen noch zu viele Störsignale entstehen würden. Ein Vorteil der Erfindung ist, daß sie einen sicheren Schutz vor metallischen Fremkörpern bietet, da über die gesamte Breite des Förderweges ein ausreichend hohes und fast gleichbleibendes Erkennungssignal erzeugt wird. Dafür ist maßgebend, daß durch den relativ großen mittleren Polabstand des Magneten und die große Polbreite die Magnetfeldwirkungslinien eine große Reichweite haben. Außerdem ist es durch die Lage der Pole auf einer Linie quer zur Förderrichtung des Erntegutes möglich, diese beim Einbau in die untere vordere Walze des Zuführsystemes ganz nahe an deren Innendurchmesser heranzubringen, wodurch die vorhandene Reichweite maximal ausgenutzt werden kann. Ein weiterer Vorteil der erfindungsgemäßen Vorrichtung ist, daß man durch die problemlos mögliche Verschiebung der beiden Aufnahmespulen auf der Linie quer zur Förderrichtung des Erntegutes und/oder der Pole des Magneten sowie deren Aufmagnetisierung in gleicher Weise praktisch in der Lage ist, jeden gewünschten Kurvenverlauf für das Erkennungssignal über der Breite der Zuführvorrichtung zu erzeugen. Bezüglich der Materialaufwendungen ist die erfindungsgemäße Vorrichtung ebenfalls von Vorteil, da die Aufnahmespulen nur einen Teil der Breite des Förderweges ausfüllen müssen. Auch die Pole des Magneten müssen bei dieser Lage der Magnetfeldlinien nicht über die gesamte Breite des Förderweges vorhanden sein.

Auch im Herstellungsprozeß treten bei dieser Vorrichtung keine besonderen Schwierigkeiten auf, da es nicht wie bei den Lösungen mit Kompensationseffekt auf einen exakten Symmetrieabgleich der Aufnahmespulen und der Magnetfelder ankommt. Es können auch Aufnahmespulen zur Anwendung kommen, die für das Wickeln ein günstiges Längen-Breitenverhältnis aufweisen.

Im folgenden wird die Erfindung an einem Ausführungsbeispiel näher erläutert werden. In der dazugehörenden Zeichnung zeigen:

Figur 1 einen Teilschnitt durch die untere Zuführwalze mit eingebauter Vorrichtung zum Schutz vor metallischen Fremdkörpern;

Figur 2 einen Schnitt gemäß Fig. 1;

Figur 3 eine Draufsicht auf die Magnetfelderzeugungseinrichtung und die Lage und Schaltung der Aufnahmespulen schematisch;

Figur 4 ein Diagramm der Reichweite der Erkennungsmöglichkeit H über der Breite des Zuführkanales.

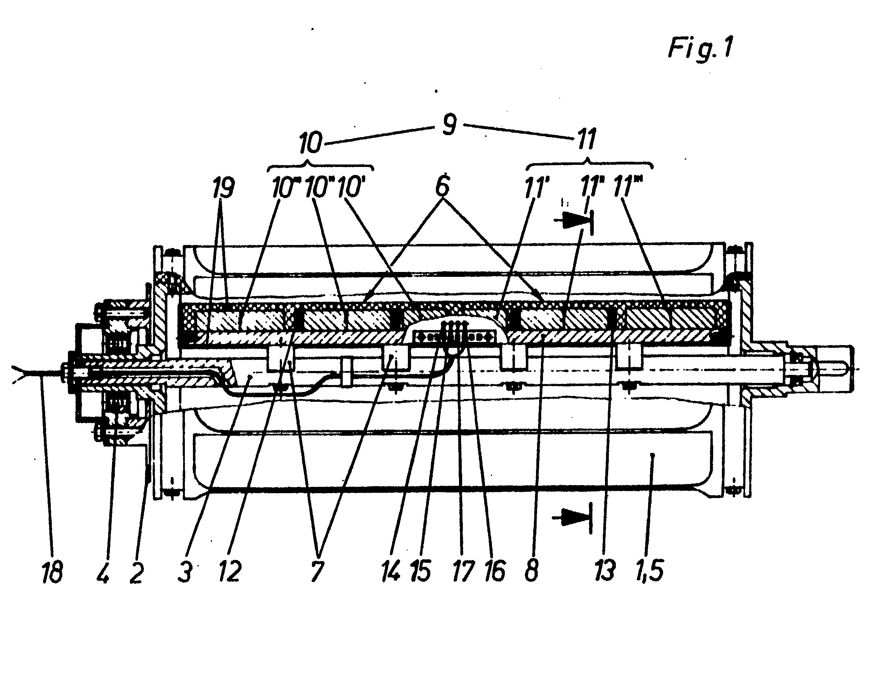

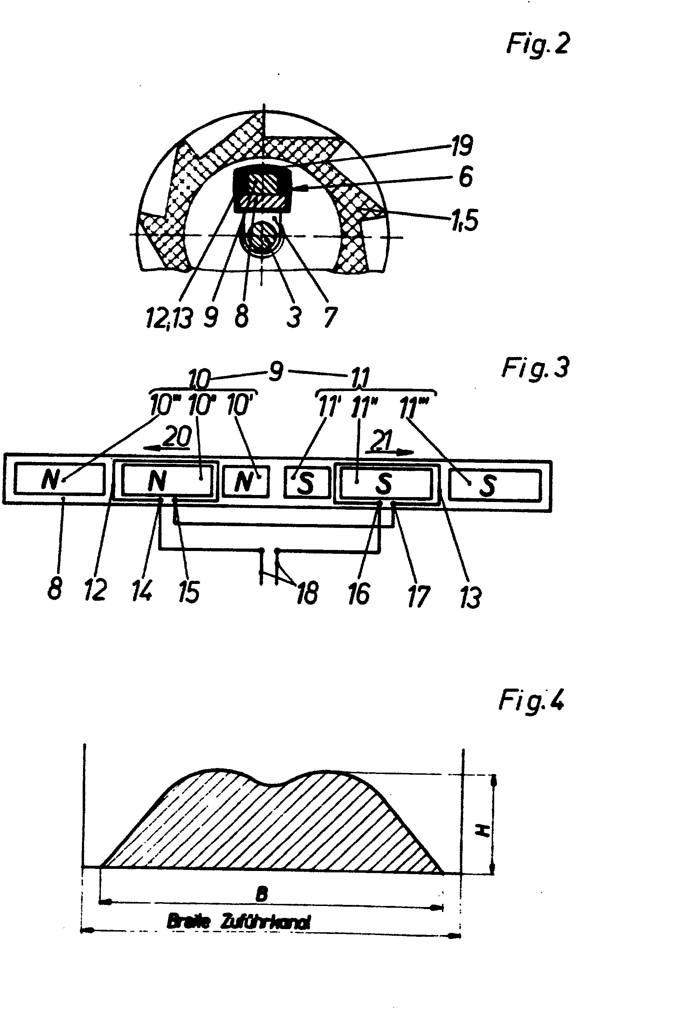

Im Ausführungsbeispiel wird auf eine Vorrichtung zum Schutz der Häckseltrommel eines Feldhäckslers Bezug genommen, die in der vorderen unteren Walze 1 aus Plast eines nicht dargestellten Zuführsystemes eingebaut ist. Zwischen Seitenwänden 2 des Zuführsystemes ist eine Achse 3 befestigt, auf der in Lagerungen 4 außerhalb des Zuführsystemes der Walzenkörper 5 der unteren Walze 1 drehbar gelagert ist. Der Einfachheit halber ist diese Lagerung 4 in Fig. 1 nur auf einer Seite dargestellt. Innerhalb des Walzenkörpers 5 ist die Magnetfelderzeugungseinrichtung 6 angeordnet, wobei auf der Achse 3 über Zwischenstücke 7 eine Grundplatte 8 mit guter magnetischer Leitfähigkeit lösbar befestigt ist. Auf dieser Grundplatte 8 ist ein Magnet 9 so angebracht, daß sich dessen einer Pol 10 innerhalb der linken Hälfte des Walzenkörpers 5 befindet und der andere Pol 11 auf der rechten. Dadurch wird ein Magnetfeld erzeugt, dessen Magnetfeldwirkungslinien quer zur Förderrichtung des Erntegutes verlaufen. Im Ausführungsbeispiel besteht der Pol 10, ausgebildet als Nordpol, aus drei Einzelmagnetpolen 10'; 10"; 10''' und der Pol 11 ebenfalls aus drei Einzelmagnetpolen 11'; 11"; 11'''. Um die Einzelmagnetpole 10" und 11" sind aus mehreren Windungen bestehende Aufnahmespulen 12; 13 angeordnet. Deren Anschlußklemmen 15; 17 sind miteinander elektrisch leitend verbunden, und die Anschlußklemmen 14; 16 führen als Kabel 18 zu einer nicht dargestellten Signalverarbeitungseinrichtung. Damit die Lage der Einzelmagnetpole 10'; 10"; 10'''; 11'; 11"; 11''' und der Aufnahmespulen 12; 13 auf der Grundplatte 8 fixiert ist und außerdem die gesamte Vorrichtung gegen Feuchtigkeit und Schmutz geschützt ist, befinden sich alle genannten Bauteile in einem gemeinsamen Plastgehäuse 19. Nähert sich der Magnetfelderzeugungseinrichtung 6 ein metallischer Fremdkörper, wird in den Aufnahmespulen 12; 13 eine Spannung induziert, die einen Strom 20; 21 fließen läßt, dessen Größe von der Entfernung des metallischen Fremdkörpers von den Aufnahmespulen 12; 13 abhängig ist. Durch die Reihenschaltung der Aufnahmespulen 12;13 addieren sich beide Ströme 20; 21, und dieser Strom geht zur Signalauswerteeinrichtung, die entsprechend der gewählten Bauart das gewonnene Signal umsetzt, d. h. optische oder akustische Anzeige des metallischen Fremdkörpers bis hin zur automatischen Stillsetzung des Zuführsystemes. Das Erkennungsprofil ist in Fig. 4 dargestellt, woraus zu ersehen ist, daß die Erkennungsmöglichkeit H bereits sehr nahe der Seitenwand 2 gegeben ist und nach einem steilen Anstieg zur Mitte hin im gefährdetsten Bereich, d. h. wo das meiste Erntegut ankommt, sehr hoch und nahezu gleichbleibend ist.

## Patentansprüche

1. Vorrichtung zum Schutz der Arbeitsorgane einer Erntemaschine, insbesondere eines Feldhäckslers, die in der Nähe des Förderweges des zuzuführenden Erntegutes angeordnet ist, die eine Magnetfelderzeugungseinrichtung (6) zur Erzeugung eines etwa über die Breite des Förderweges reichenden Magnetfeldes und eine dem Magnetfeld zugeordnete Aufnahmespule (12; 13) aufweist, in der bei Förderung eines metallischen Fremdkörpers durch das Magnetfeld hindurch ein an nachgeschaltete Signalauswerteeinrichtungen weitergeleitetes Erkennungssignal induziert wird, dadurch gekennzeichnet, daß die Magnetfelderzeugungseinrichtung (6) aus einem Magneten (9) besteht, dessen einer Pol (10) sich über die Breite des Förderweges gesehen auf der einen Hälfte befindet und der andere Pol (11) auf der anderen Hälfte, so daß die Magnetfeldwirkungslinien quer zur Förderrichtung des Erntegutes verlaufen und daß sich annähernd im mittleren Bereich jedes Poles (10; 11) je eine Aufnahmespule (12; 13) befinden, die untereinander so in Reihe geschaltet sind, daß sich die durch Annäherung eines metallischen Fremdkörpers in beiden Aufnahmespulen (12; 13) erzeugten Ströme (20; 21) addieren.

2. Vorrichtung nach Patentanspruch 1, dadurch gekennzeichnet, daß jeder der Pole (10; 11) jeweils aus wenigstens zwei Einzelmagnetpolen (10'; 10"; 11'; 11") gleicher Polarität gebildet ist.

3. Vorrichtung nach Patentanspruch 1 oder 2, dadurch gekennzeichnet, daß bei einer Bildung der Pole (10; 11) aus jeweils drei annähernd gleich langen Einzelmagnetpolen (10'; 10"; 10'''; 11'; 11"; 11'''), die untereinander spielgebend fast die gesamte Breite des Förderweges ausfüllen, lediglich um die mittleren Einzelmagnetpole (10"; 11") der Pole (10; 11) Aufnahmespulen (12; 13) gelegt sind, deren erste Anschlußklemmen (15; 17) miteinander elektrisch leitend verbunden sind und deren zweite Anschlußklemmen (14; 16) zu einer Signalauswerteeinrichtung geführt sind.

4. Vorrichtung nach Patentanspruch 3, dadurch gekennzeichnet, daß bei den Aufnahmespulen (12; 13) die zweiten Anschlußklemmen (14; 16) miteinander elektrisch leitend verbunden sind und die ersten Anschlußklemmen (15; 17) zu einer Signalauswerteeinrichtung geführt sind.

5. Vorrichtung nach Patentanspruch 1, 2 oder 3, dadurch gekennzeichnet, daß jeder der Pole (10; 11) über die Breite des Förderweges gesehen solche Abmessungen aufweist, daß er annähernd jeweils von der Seitenwand (2) des Zuführsystemes bis zu dessen Mitte reicht.

## Claims

1. Apparatus for protecting the working elements of a harvesting machine, especially a forage harvester, which is arranged in the vicinity of the conveyor path of the harvested material to be fed, which comprises a magnetic field generating device (6) for generating a magnetic field extending approximately over the width of the conveyor path and a receiving coil (12; 13) associated with the magnetic field, in which a detection signal is induced on conveying a metallic foreign body through the magnetic field, which signal is passed on to a following signal processing device, characterized in that the magnetic field generating device (6) consists of a magnet (9) whose one pole (10) extends over the one half regarded over the width of the conveyor path and the other pole (11) over the other half, so that the magnetic lines of force run transverse to the conveying direction of the harvested material and in that there is located approximately in the middle of each pole (10; 11) a respective receiver coil (12; 13), the coils being so connected in series that the currents (20; 21) generated in the two receiver coils (12; 13) by the approach of a metallic foreign body add together.

2. Apparatus according to patent claim 1, characterized in that each of the poles (10; 11) is formed from at least two individual magnetic poles (10'; 10''; 11'; 11'') of like polarity.

3. Apparatus according to patent claim 1 or 2, characterized in that, with a formation of each of the poles (10; 11) from three individual magnetic poles (10'; 10''; 10'''; 11', 11'', 11''') of approximately equal length, which together fill almost the whole width of the conveyor path with play therebetween, receiver coils (12; 13) are disposed merely around the middle individual magnetic poles (10''; 11'') of the poles (10; 11), of which coils first terminals (15; 17) are electrically connected together and whose second terminals (14; 16) are fed to a signal processing device.

4. Apparatus according to patent claim 3, characterized in that in the receiver coils (12; 13) the terminals (14; 16) are electrically connected together and the first terminals (15; 17) are fed to a signal processing device.

5. Apparatus according to patent claim 1, 2 or 3, characterized in that each of the poles (10; 11) has such dimensions, viewed over the width of the conveyor path, that it extends in each case approximately from the sidewall (2) of the feed system up to its middle.

## Revendications

1. Dispositif pour protéger les organes de travail d'une moissonneuse, et en particulier d'une ramasseuse-hacheuse, qui est disposé au voisinage du trajet de déplacement du produit récolté à amener, et qui comporte un dispositif générateur de champ magnétique (6) pour engendrer un champ magnétique qui s'étend à peu près sur toute la largeur du trajet de déplacement et une bobine réceptrice (12, 13) associée au champ magnétique dans laquelle, lors du déplacement d'un corps étranger métallique à travers le champ magnétique, est induit un signal de détection transmis à des dispositifs d'exploitation des signaux montés en aval, caractérisé par le fait que le dispositif générateur de champ magnétique (6) se compose d'un aimant (9) dont un pôle (10), vu sur la largeur du trajet de déplacement, se trouve sur l'une de ses moitiés, et dont l'autre pôle (11) se trouve sur l'autre moitié, de sorte que les lignes d'action du champ magnétique s'étendent transversalement par rapport à la direction de déplacement du produit récolté, et par le fait qu'une bobine réceptrice (12, 13) se trouve à chaque fois à peu près dans la zone centrale de chaque pôle (10, 11), ces bobines étant montées en série entre elles, de telle manière que les courants (20, 21) engendrés dans les deux bobines réceptrices (12, 13) par l'approche d'un corps étranger métallique s'additionnent.

2. Dispositif selon la revendication 1, caractérisé par le fait que chacun des pôles (10, 11) est à chaque fois constitué d'au moins deux pôles magnétiques élémentaires (10', 10'', 11', 11'') de même polarité.

3. Dispositif selon la revendication 1 ou 2, caractérisé par le fait que, dans le cas d'une formation des pôles (10, 11) à partir de trois pôles magnétiques élémentaires à chaque fois (10', 10'', 10''', 11', 11'', 11''') dont la longueur est à peu près la même et qui remplissent presque la totalité de la largeur du trajet de déplacement en laissant un jeu entre eux, c'est seulement autour des pôles magnétiques élémentaires centraux (10'', 11'') des pôles (10, 11) que sont posées des bobines réceptrices (12, 13) dont les premières bornes de raccordement (15, 17) sont reliées entre elles de manière conductrice de l'électricité et dont les deuxièmes bornes de raccordement (14, 16) sont amenées à un dispositif d'exploitation des signaux.

4. Dispositif selon la revendication 3, caractérisé par le fait que, dans les bobines réceptrices (12, 13), les bornes de raccordement (14, 16) sont reliées entre elles de manière conductrice de l'électricité et les premières bornes de raccordement (15, 17) sont amenées à un dispositif d'exploitation des signaux.

5. Dispositif selon la revendication 1, 2 ou 3, caractérisé par le fait que chacun des pôles (10, 11), vu sur la largeur du trajet de déplacement, présente des dimensions telles qu'il s'étent à chaque fois approximativement depuis la paroi latérale (2) du système d'alimentation jusqu'au milieu de celui-ci.

Fig.1

*Fig. 2*

*Fig. 3*

*Fig. 4*